# EUROPÄISCHE PATENTANMELDUNG

(11) **EP 2 236 420 A2**
(43) Veröffentlichungstag der Anmeldung: **06.10.2010**
(21) Anmeldenummer: 10158091.8
(22) Anmeldetag: 28.03.2010
(51) Int. Cl.: B64D 17/02, B64D 17/10

(54) **Flugschirm und Verfahren zu dessen Herstellung**

(30) Priorität: 03.04.2009 DE 102009017462
(71) Anmelder: Köflinger, Christian, 6330 Kufstein (AT)
(72) Erfinder: Köflinger, Christian, 6330 Kufstein (AT)
(74) Vertreter: Renger, Florian

(57) **Zusammenfassung**

Ein Flugschirm mit wenigstens einem Flächengebilde (11), das mindestens einlagig ausgebildet ist und das aus einer Mehrzahl von miteinander verbundenen Stoffbahnen (12a,12b,12c) oder Stoffstücken besteht, die in Randbereichen dauerhaft miteinander verbunden sind, zeichnet sich dadurch aus, dass die Stoffbahnen (12a,12b,12c) oder Stoffstücke stoffschlüssig miteinander verbunden sind durch Verschweißen.

## Beschreibung

Die Erfindung betrifft einen Schirm bzw. Flugschirm mit wenigstens einem Flächengebilde, das mit Luft gefüllt sein kann und das aus einer oder mehreren miteinander verbundenen Stoffbahnen oder Stoffstücken besteht, sowie ein Verfahren zu dessen Herstellung. Die hier beschriebene Erfindung befasst sich insbesondere mit einer neuartigen Fügetechnik, welche im Paragleiter-, Gleitschirm-, Hängegleiter, Base-Jump-, Rettungsschirm-, Kite-, Fallschirm-, Segel- und Windsurfsegelbau Anwendung findet.

Die übliche Fügetechnik ist das Vernähen der oben beschriebenen Produkte, des weiteren ist auch noch deren Verkleben bekannt. Nachteilig beim Vernähen ist die örtliche Schwächung des zu nähenden Materials, des weiteren wird durch die örtliche Schädigung des Materials an den Einstichstellen der Nadel eine unerwünschte Luftdurchlässigkeit erzeugt. Ein weiterer Nachteil des Nähens sind der durch die Fertigung üblicherweise entstehende Verzug und daraus resultierende Falten.

Beim Kleben von oben genannten Materialien als Gewebe ergibt sich durch das Einbringen des Klebers in die Fügestelle der Aufbau Gewebe-Kleber-Gewebe. Da dieser Aufbau üblicherweise aus unterschiedlichen Materialien besteht und bei unterschiedlichen Temperaturen eine feste Verbindung gewährleisten muss, werden bei diesem Aufbau durch die unterschiedlichen Temperatur-Ausdehnungskoeffizienten zusätzliche Spannungen in die Fügestelle eingebracht. Außerdem ist es sehr aufwendig in der Produktion und die Lebensdauer ist begrenzt.

Durch die beiden oben beschriebenen Fügetechniken wird darüber hinaus auch noch zusätzliches Gewicht mit eingebracht.

### Aufgabe und Lösung

Der Erfindung liegt die Aufgabe zugrunde, einen eingangs genannten Flugschirm sowie ein Verfahren zu dessen Herstellung zu schaffen, mit denen Probleme des Standes der Technik vermieden werden können und insbesondere auf vorteilhafte Art und Weise ein leichter und stabiler Schirm günstig hergestellt werden kann mit hochwertigen Fügestelle und mit guter Reproduzierbarkeit.

Gelöst wird diese Aufgabe durch einen Flugschirm mit den Merkmalen des Anspruchs 1 sowie ein Verfahren zu dessen Herstellung mit den Merkmalen des Anspruchs 8. Vorteilhafte sowie bevorzugte Ausgestaltungen der Erfindung sind Gegenstand der weiteren Ansprüche und werden im folgenden näher erläutert. Manche der nachfolgend aufgezählten Merkmale werden nur für den Flugschirm oder das Verfahren genannt. Sie sollen jedoch unabhängig davon für den Flugschirm und das Verfahren gelten können. Der Wortlaut der Ansprüche wird durch ausdrückliche Bezugnahme zum Inhalt der Beschreibung gemacht.

Durch die neue Fügetechnik des stoffschlüssigen Verbindens durch Verschweißen kann bei der Herstellung auch auf ein Übermaß des Gewebes der Stoffbahnen oder Stoffstücke aufgrund des nicht vorhandenen Verzuges bei der Fertigung verzichtet werden. Die Verschweißung bzw. Schweißbahn kann sowohl luftdicht, wenn für die Verbindung gewünscht, als auch luftdurchlässig, nur zum Übertragen der auftretenden Kräfte, gefertigt werden, beispielsweise mit Unterbrechungen, also diskontinuierlich. Ein weiterer Vorteil der Erfindung ist, daß die Fügestelle ohne Zugabe eines Verbindungsmittels gefertigt werden kann. Daraus ergeben sich im Unterschied zum Verkleben keine zusätzlichen Spannungen aufgrund der unterschiedlichen Wärme-Ausdehnungskoeffizienten und keine Gewichtszunahme.

In Weiterbildung der Erfindung ist es möglich, dass einlagige Stoffbahnen oder Stoffstücke miteinander verschweißt werden, also zwei einlagige Stoffbahnen, und sich dabei im Bereich der Verschweißung überlappen. Allgemein findet eine Verschweißung vorteilhaft mit Überlappung des jeweiligen Materials statt, wobei Überlappungen im Bereich von wenigen Zentimetern bis hinunter zu knapp einem Zentimeter als ausreichend angesehen werden. Vorteilhaft sind es maximal zwei bis drei Zentimeter.

In einer Ausgestaltung der Erfindung können jeweils zwei nebeneinander befindliche Stoffbahnen miteinander verschweißt werden, deren Flächenverlauf nach der Verschweißung in etwa gleich ist, beispielsweise für die Hauptflächen eines Flugschirms. Des weiteren können aber auch noch zusätzliche Stoffbahnen oder Stoffstücke, beispielsweise als dritte oder sogar auch als vierte Lage, dazukommen. Dazu wird das Material vorteilhaft nicht auf Stoß geschweißt, sondern ein Randbereich als Streifen umgebogen und wiederum flächig mit der anderen Stoffbahn verschweißt. Hier ist es sogar möglich, solche dritte Stoffbahnen im Bereich einer Verschweißung von zwei anderen Stoffbahnen ebenfalls zu verschweißen, so dass also quasi eine dreilagige Verschweißung vorliegt bzw. ein dreilagiger Schweißbereich.

Vorteilhaft können Verschweißungen durchgehend sein, beispielsweise als Schweißnähte oder Schweißbahnen. Dies gibt pro Längeneinheit eine maximale Verbindungsfestigkeit. Dabei können auch luftdichte Verbindungen geschaffen werden. Soll eine Verbindung aber luftdurchlässig sein, so können Verschweißungen oder die genannten Schweißnähte bzw. Schweißbahnen immer wieder Unterbrechungen aufweisen nach Art einer Strichlierung.

Die Breite von Schweißnähten bzw. Schweißbahnen kann abhängig von verwendeten Material variieren. Vorteilhaft sind sie maximal einen Zentimeter breit, besonders vorteilhaft einige Millimeter wie 3 bis 6 Millimeter.

In nochmaliger Weiterbildung der Erfindung kann vorgesehen sein, dass eine Art Doppelverschweißung geschaffen wird durch zwei nahe beieinander vorgesehene bzw. nahe nebeneinander verlaufende Schweißbahnen. Deren Abstand kann gering sein, beispielsweise drei Zentimeter oder weniger betragen. Dies kann vor allem dann gemacht werden, wenn die Schweißbahnen selbst relativ schmal sind, so dass insgesamt eine größere verschweißte Fläche entsteht. Ein solches doppeltes Verschweißen kann gleichzeitig erfolgen, also beide Schweißbahnen werden gleichzeitig hergestellt. Alternativ kann es sequentiell erfolgen, wodurch dann beispielsweise eine Vorfixierung mit einer Schweißbahn erfolgt, beispielsweise mit einer relativ schmalen Schweißbahn. Die zweite Schweißbahn ist dann breiter und kann für eine höhere Festigkeit ausgelegt sein. Es kann auch ein vom Nähen bekanntes Vorheften mit einer Schweißbahn erfolgen, insbesondere auch mit mehreren Schweißpunkten, also nicht als durchgehende Schweißbahn.

In einer Ausgestaltung der Erfindung kann ein Verschweißen kontinuierlich erfolgen, also die Schweißbahn kontinuierlich erzeugt werden. Dafür bietet sich insbesondere Laserschweißen an. Der Laser bzw. der Laserpunkt bewegt sich dann im wesentlichen gleichmäßig relativ zu den zu verschweißenden Stoffbahnen.

Alternativ kann ein Verschweißen sozusagen diskontinuierlich erfolgen, beispielsweise mit einer Art Schweißstempel oder ähnlichem, der in entsprechenden Abständen auf die Stoffbahnen gedrückt wird und dann die Verschweißung durchführt. Dabei kann ein Heizdraht dagegen gedrückt werden, was auch als Wärme-Impuls-Schweißen bekannt ist. Diese Abschnitte werden dann immer wieder entweder mit Abstand zueinander oder direkt aneinander angesetzt, um eine durchgehende Schweißbahn zu erzeugen.

Mögliche Schweißverfahren, die von dem verwendeten Material, dessen Eigenschaften und dessen Dicke abhängen, sind Ultraschallschweißen, Thermoschweißen, Reibschweißen, Hochfrequenzschweißen sowie das vorgenannte Wärme-Impuls-Schweißen, Laserschweißen oder mit Infrarot.

Auch bei dem vorbeschriebenen Verschweißen von drei oder sogar noch mehr Lagen von Stoffbahnen, insbesondere auch über eine größere Länge hinweg, können alle drei gleichzeitig miteinander verschweißt werden. In diesem Fall ist es sogar möglich, an den Stoffverbund von beiden Seiten aus die Schweißenergie heranzutragen.

In nochmals weiterer Ausgestaltung der Erfindung ist es möglich, insbesondere bei relativ empfindlichen Materialien, eine hergestellte Verschweißung direkt hinter einer Verschweißeinrichtung bzw. einem Schweißpunkt zu kühlen. Dies kann beispielsweise durch Anblasen mit Luft erfolgen.

Diese erfindungsgemäße Fügetechnik soll nicht nur zur Verbindung des Stoffes gelten, um eine luftdichte Verbindung oder/und eine Stoffverbindung zur Übertragung der vorhandenen Kräfte zu gewährleisten, sondern durch die Verwendung von Schweißnähten kann auch eine Versteifung des Materials durch zusätzlich angebrachte Verschweißungen erreicht werden. Durch diese Verstärkungen kann wieder Material, das bei der bisherigen Herstellung für Verstärkungen und zur Formgebung genutzt wurden, weggelassen werden. Des weiteren kann man durch die Fügetechnik des Verschweißens nicht nur Stoffe bzw. Stoffbahnen miteinander verbinden, sondern es ist auch möglich, Verstärkungen aus anderen Materialien als eine Art Verstärkungsrippen herzustellen.

Zusätzlich zur Herstellung der Fläche des Flugschirms können auch Verstärkungen wie Stofflaschen zur Anbringung der Halte- und Steuerleinen durch Verschweißen angebracht werden. Diese können entweder als kleine beispielsweise dreieckige Stoffstücke ausgebildet sein mit einer Öse an einer Ecke für eine Befestigung von Leinen. Alternativ können es schleifenartig ausgebildete Stoffstreifen sein, die ein Auge bilden, in dem eine Leine befestigt werden kann.

Diese und weitere Merkmale gehen außer aus den Ansprüchen auch aus der Beschreibung und den Zeichnungen hervor, wobei die einzelnen Merkmale jeweils für sich allein oder zu mehreren in Form von Unterkombinationen bei einer Ausführungsform der Erfindung und auf anderen Gebieten verwirklicht sein und vorteilhafte sowie für sich schutzfähige Ausführungen darstellen können, für die hier Schutz beansprucht wird. Die Unterteilung der Anmeldung in einzelne Abschnitte sowie Zwischen-Überschriften beschränken die unter diesen gemachten Aussagen nicht in ihrer Allgemeingültigkeit.

### Kurzbeschreibung der Zeichnungen

Ausführungsbeispiele der Erfindung sind in den Zeichnungen schematisch dargestellt und werden im folgenden näher erläutert. In den Zeichnungen zeigen:
- Fig. 1: eine Darstellung, wie mehrere Stoffbahnen erfindungsge- mäß zusammengefügt werden durch Verschweißen mit Detailvergrößerungen,
- Fig. 2: eine Darstellung, wie zwei Stoffbahnen in einer Ebene und eine senkrecht dazu gestellte Stoffbahn zusammen- gefügt werden,
- Fig. 3: die Anordnung aus Fig. 2 im zusammengefügten Zu- stand,
- Fig. 4 bis 7: verschiedene Arten von Verschweißungen bzw. Arten der Überlappung zweier oder dreier Stoffbahnen,
- Fig. 8 bis 10: verschiedene Ausbildungen von Schweißbahnen in Draufsicht und
- Fig. 11: eine Anordnung ähnlich Fig. 3 mit befestigten Laschen.

### Detaillierte Beschreibung der Ausführungsbeispiele

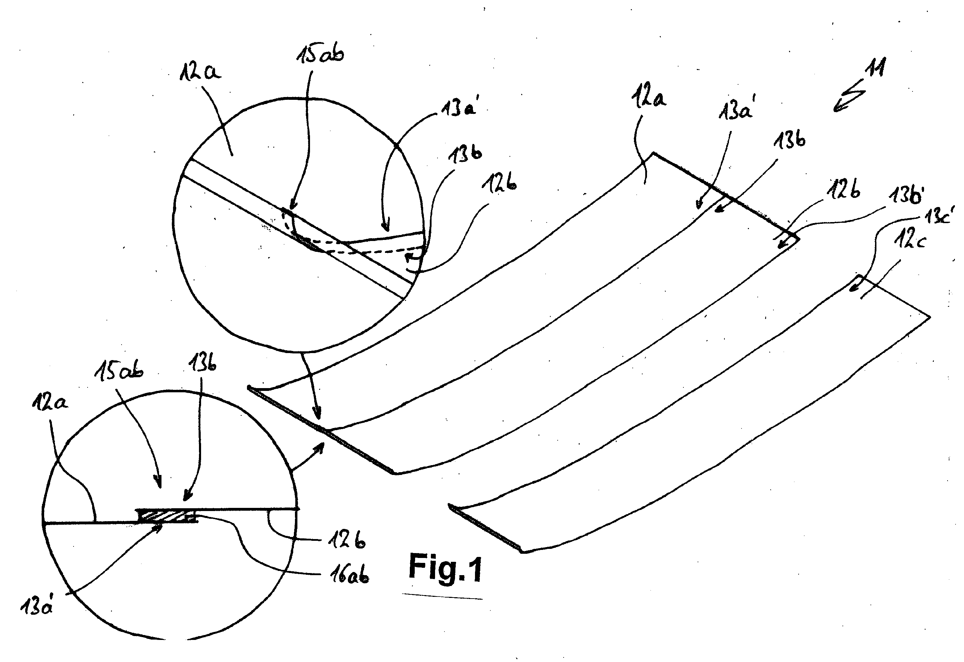

In Fig. 1 ist ein erfindungsgemäßes Flächengebilde 11 dargestellt, welches zu einem selbst nicht dargestellten Flugschirm zusammengefügt bzw. aufgebaut wird. Da der endgültige Aufbau bzw. die Konstruktion des fertigen Gleitschirms an sich bekannt ist, braucht dies nicht weiter dargestellt zu werden. Das Flächengebilde 11 besteht aus Stoffbahnen 12a, 12b und 12c. Diese werden in Randbereichen 13a', 13b, 13b' und 13c zusammengefügt. Die Stoffbahnen 12 haben dabei im wesentlichen übliche Form für einen Flugschirm bzw. Gleit- oder auch Fallschirm.

Die Randbereiche 13a' und 13b der Stoffbahnen 12a und 12b sind in einem Überlappungsbereich 15ab miteinander verbunden, und zwar über die gesamte Länge der Stoffbahnen 12. Dies ist aus den beiden Vergrößerungen zu erkennen. Eine im Überlappungsbereich 15 abgebildete Schweißbahn 16 ist mit stark übertriebener Dicke dargestellt zur Verdeutlichung. Sie erstreckt sich nahezu über die gesamte Breite des Überlappungsbereichs 15ab um eine möglichst gute und stabile Verbindung zu gewährleisten. Dies muss aber nicht so sein. Wie an sich vom Aufbau von Flugschirmen bzw. Gleitschirmen her bekannt, werden die Stoffbahnen 12 nacheinander zusammengefügt. Auch wenn kein vollkommen ebenes Flächengebilde 11 entsteht, so werden sie doch im Sinne dieser Anmeldung als in etwa in derselben Ebene verlaufend angesehen.

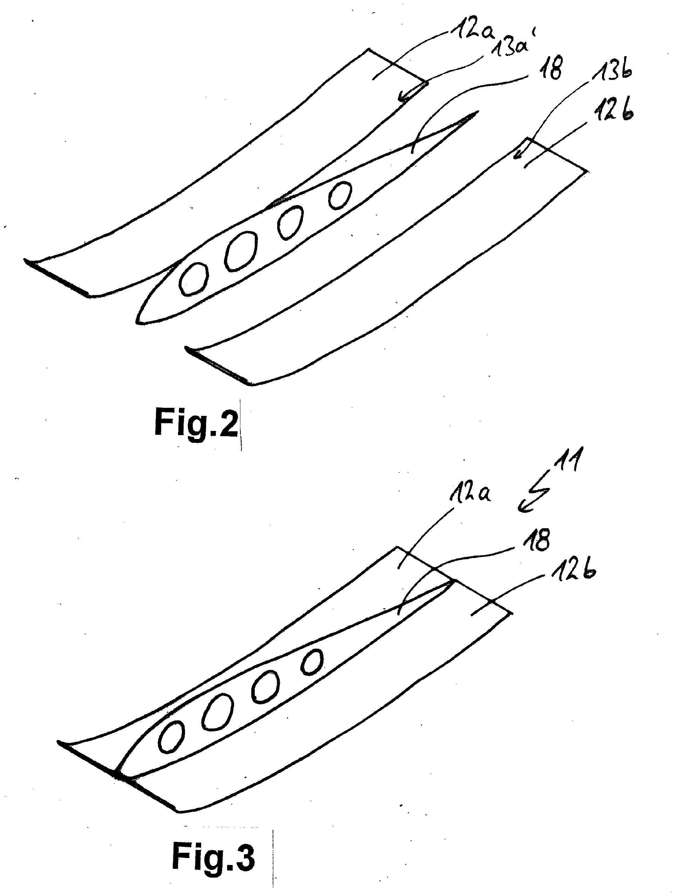

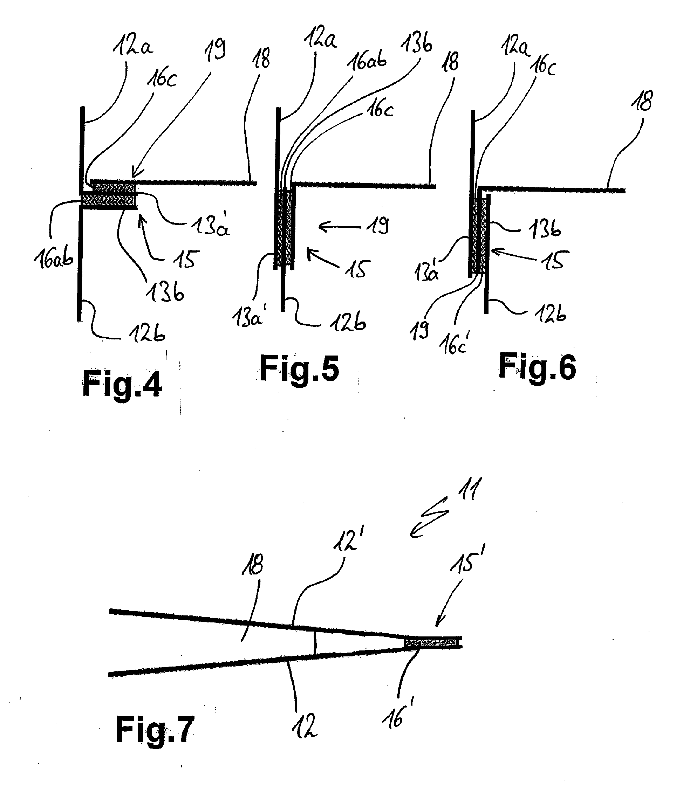

In den Fig. 2 und 3 ist dargestellt, wie zwei Stoffbahnen 12a und 12b miteinander verbunden werden und dabei in deren Überlappungsbereich 15 eine weitere Stoffbahn nach Art einer üblichen Rippe 18 angesetzt ist bzw. befestigt ist. Dies kann so erfolgen, dass zuerst entsprechend Fig. 1 die beiden Stoffbahnen 12a und 12b miteinander verbunden werden und dann die Rippe 18 angeschweißt wird. Bevorzugt werden die drei Teile aber in einem Schritt miteinander verschweißt. Dadurch ergibt sich dann ein Aufbau, wie er in den Fig. 4 oder 5 in Vergrößerung dargestellt ist. Letztendlich steht dann die Rippe 18 gemäß Fig. 3 sozusagen senkrecht zu der Fläche der Stoffbahnen 12a und 12b und ist ebenfalls über ihre gesamte Länge mit diesen verschweißt.

Bei dem Aufbau gemäß Fig. 4 werden die Randbereiche 13a' und 13b der Stoffbahnen 12a und 12b um etwa 90° abgewinkelt und miteinander verschweißt durch eine Schweißbahn 16ab. Es könnte aber auch ein anderer Winkel sein. Anders als in dem Detail links unten in Fig. 1, bei dem die Oberseite der Stoffbahn 12a und die Unterseite der Stoffbahn 12b miteinander verschweißt werden, werden hier die beiden Oberseiten der Stoffbahnen 12a und 12b miteinander verschweißt. Dies kann beispielsweise dann von Vorteil sein, wenn sich die Oberseiten und Unterseiten der Stoffbahnen 12 hinsichtlich ihrer Eigenschaften bezüglich Verschweißung unterscheiden. Des weiteren ist hier der Vorteil gegeben, dass dann die Schnittkanten der Randbereiche 13a'und 13b nach innen zeigen. Der lose Stoffrand bzw. lose Fäden sind nicht außen sichtbar und können nicht in der Luftströmung flattern, was störend wäre und den Luftwiderstand erhöhen würde.

An eine der Außenseiten des Überlappungsbereichs 15ab, in diesem Fall an die obere, wird dann die Rippe 18 mit ihrem Randbereich 19 auf die selbe Art und Weise angeschweißt. Auch wenn dieses Verschweißen in einem Schritt durchgeführt werden kann, wird es verfahrenstechnisch sowie von der Handhabung der Stoffbahnen 12 und der Rippe 18 als vorteilhaft angesehen, es in zwei Schritten durchzuführen.

Alternativ kann eine Schweißverbindung gemäß Fig. 5 durchgeführt werden. Auf die Verschweißung der Stoffbahnen 12a und 12b gemäß dem Detail links unten in Fig. 1 wird der Randbereich 19 der Rippe 18 um etwa 90° abgewinkelt und auf den Überlappungsbereich 15 aufgeschweißt mit einer Schweißbahn 16c. Dabei ist es unter Umständen auch möglich, ähnlich wie für die Stoffbahnen 12a und 12b gemäß Fig. 4, die Rippe 18 erst parallel bzw. flächig auf das Flächengebilde der Stoffbahnen 12a und 12b zu legen und dann nach dem Verschweißen aufzurichten bzw. rechtwinklig abzubiegen. Dies hängt auch davon ab, wie stark beispielsweise an der Unterseite der Rippe 18 die Wölbung ist und wie sehr dabei das Material verzogen werden muss.

In Fig. 6 ist dargestellt, wie eine Rippe 18 nicht erst nach der Verbindung der Stoffbahnen 12a und 12b miteinander daran befestigt wird, sondern vorher. Dabei wird beispielsweise zuerst der Randbereich 13a' der Stoffbahn 12a mit dem Randbereich 19 der Rippe 18 verschweißt, und zwar entweder schon im abgewinkelten Zustand der Rippe 18 oder im flach aufgelegten. Anschließend wird darauf der Randbereich 13b der Stoffbahn 12b aufgelegt und verschweißt im Überlappungsbereich 15. Auch dies kann in manchen Fällen vorgenommen werden. Des weiteren ist hierbei die Rippe 18 sozusagen mit einer doppelten Verschweißung, nämlich den Schweißbahnen 16c und 16c', an die Stoffbahnen 12a und 12b angebunden und somit besonders fest integriert.

Oben auf die Konstruktion gemäß Fig. 3 wird dann ein weiteres Flächengebilde 11 ähnlich Fig. 1 aufgelegt und verschweißt. Hier ergeben sich dieselben Möglichkeiten für eine Verschweißung wie in den Fig. 2 bis 6 dargestellt.

Im hinteren Bereich der Stoffbahnen 12a und 12b gemäß Fig. 3 werden diese miteinander verbunden bzw. liegen nahezu flächig aufeinander auf. Hier ist im Querschnitt eine Schweißverbindung in Fig. 7 dargestellt, wobei sich die Rippe 18 nicht ganz bis in den hintersten Verbindungsbereich erstreckt, sondern erkennbar kurz davor aufhört. Im hinteren Bereich wird dann die untere Stoffbahn 12 mit einer oberen Stoffbahn 12' in einem Überlappungsbereich 15' verschweißt. Die dabei entstehende Schweißbahn 16' weist ebenfalls wieder eine gleichmäßige Dicke bzw. Höhe auf.

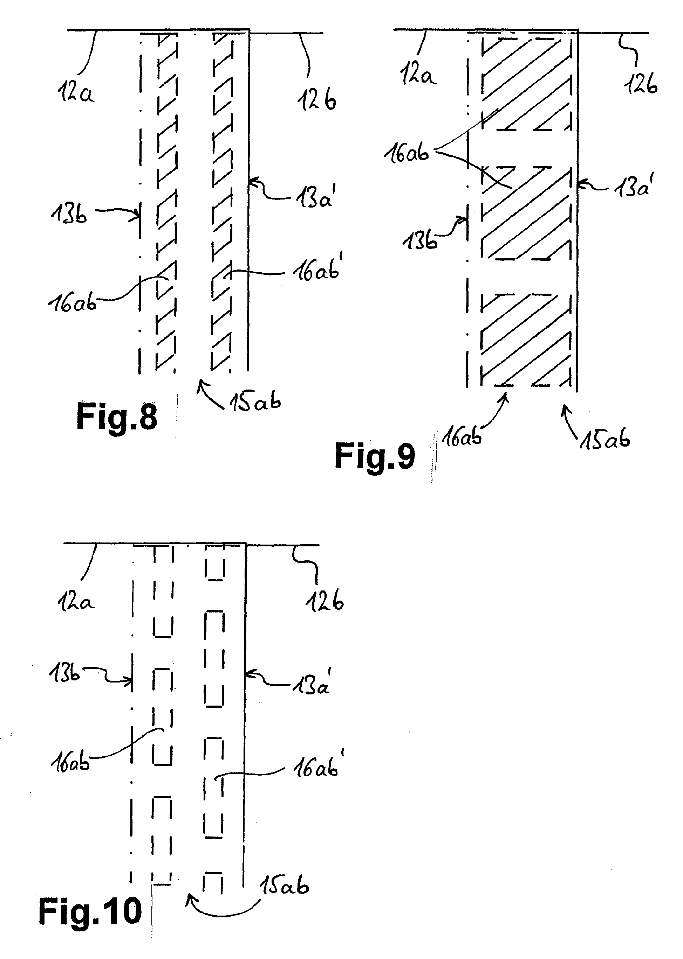

In den Fig. 8 bis 10 sind verschiedene Arten gezeigt, wie Schweißbahnen ausgeführt sein können. In Fig. 8 sind im Überlappungsbereich 15ab der Randbereiche 13a' und 13b zwei durchgehende Schweißbahnen 16ab und 16ab' dargestellt. Hier erfolgt also eine quasi gedoppelte Verschweißung. Die Schweißbahnen 16ab und 16ab' sind in der Praxis etwa 5 Millimeter breit und weisen einen Abstand von etwa einem Zentimeter zwischen sich auf. Sie können aber auch näher beieinander liegen und schmaler sein. Des weiteren können sie eine unterschiedliche Breite aufweisen, beispielsweise eine dünnere Schweißbahn zuerst aufgebracht werden und anschließend eine dickere, die die hauptsächliche Festigkeit bewirkt.

In Fig. 9 ist dargestellt, wie in einem Überlappungsbereich 15ab der Randbereiche 13a' der Stoffbahn 12a und des Randbereichs 13b der Stoffbahn 12b eine einzige Schweißbahn 16ab vorgesehen ist. Diese ist allerdings nicht durchgehend, sondern immer wieder unterbrochen. Dadurch kann sie eine Luftdurchlässigkeit der ansonsten luftundurchlässigen Stoffbahnen 12 bewirken. Des weiteren ist die Schweißbahn 16ab in Fig. 9 sehr breit ausgeführt, so dass die einzelnen Abschnitte nahezu quadratische Form aufweisen. Dies muss aber nicht so sein.

In Fig. 10 ist ein Überlappungsbereich 15ab der Randbereiche 13a' und 13b der Stoffbahnen 12a und 12b dargestellt, der entsprechend Fig. 8 wiederum zwei schmalere Schweißbahnen 16ab und16ab' aufweist. Diese Schweißbahnen 16ab und 16ab' sind wiederum nicht durchgehend ausgebildet, sondern ähnlich wie in Fig. 9 mit kurzen, etwas voneinander beabstandeten Abschnitten. Die Abschnitte der beiden Schweißbahnen 16ab und 16ab' sind derart zueinander versetzt, dass ein Abschnitt der einen Schweißbahn genau neben einer Lücke zwischen zwei Abschnitten der anderen Schweißbahn liegt. So kann zwar die vorbeschriebene Luftdurchlässigkeit erreicht werden, gleichzeitig ergibt sich aber insgesamt eine durchgehend feste Verbindung zwischen den Stoffbahnen 12a und 12b.

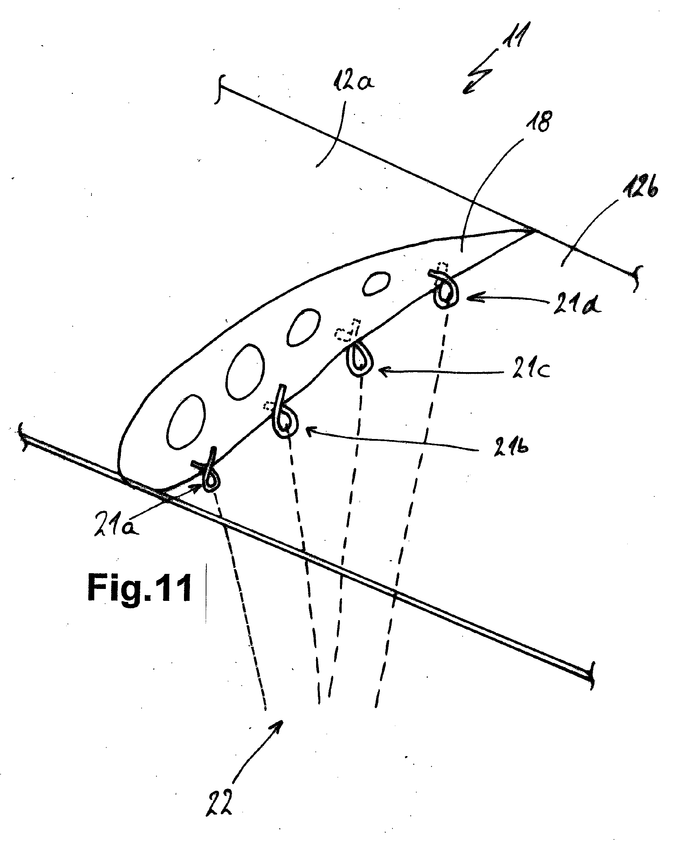

In Fig. 11 ist dargestellt, wie entsprechend Fig. 3 an der Rippe 18 noch Laschen 21a-d befestigt sein können, an denen Leinen 22 befestigt sind. Die Laschen 21a-d sind dabei unterschiedlich an der Rippe befestigt, und zwar ebenfalls verschweißt. Die Lasche 21a ist mit beiden Laschenenden auf einer Seite der Rippe 18 verschweißt. Dies gilt auch für die Lasche 21c, allerdings auf der anderen Seite der Rippe. Die Laschen 21b und 21d sind mit je einem Laschenende auf je einer Seite der Rippe verschweißt. Die von den Laschen 21a-d gebildeten Augen ragen nach unten über die Fläche der Stoffbahnen 12a und 12b und dienen zur Befestigung der Leinen 22.

## Patentansprüche

1. Flugschirm mit wenigstens einem Flächengebilde, das mindestens einlagig ausgebildet ist und das aus einer oder mehreren miteinander verbundenen Stoffbahnen oder Stoffstücken besteht, die vorzugsweise in Randbereichen dauerhaft miteinander verbunden sind, **dadurch gekennzeichnet, dass** die Stoffbahnen oder Stoffstücke stoffschlüssig miteinander verbunden sind durch Verschweißen.

2. Flugschirm nach Anspruch 1, **dadurch gekennzeichnet, dass** einlagige Stoffbahnen oder Stoffstücke miteinander verschweißt werden und sich im Bereich der Verschweißung überlappen, insbesondere um wenige Zentimeter überlappen.

3. Flugschirm nach Anspruch 1 oder 2, **dadurch gekennzeichnet, dass** die Stoffbahnen oder Stoffstücke mit durchgehenden Verschweißungen miteinander verbunden sind.

4. Flugschirm nach einem der vorhergehenden Ansprüche, **dadurch gekennzeichnet, dass** die Verschweißungen in Form von Schweißnähten bzw. Schweißbahnen ausgebildet sind mit einer Breite von maximal einem Zentimeter, vorzugsweise mit einer Breite von einigen Millimetern.

5. Flugschirm nach Anspruch 4, **dadurch gekennzeichnet, dass** mindestens zwei solcher Schweißbahnen nahe beieinander vorgesehen sind zur Verbindung von zwei Stoffbahnen oder Stoffstücken, insbesondere mit einem Abstand von weniger als drei Zentimetern.

6. Flugschirm nach einem der vorhergehenden Ansprüche, **dadurch gekennzeichnet, dass** die Stoffbahnen oder Stoffstücke ausschließlich durch Verschweißen miteinander verbunden sind.

7. Flugschirm nach einem der vorhergehenden Ansprüche, **dadurch gekennzeichnet, dass** drei oder mehr Lagen von Stoffbahnen oder Stoffstücken durch Verschweißen miteinander verbunden sind, wobei mindestens eine Lage einen Flächenverlauf außerhalb der Verschweißung aufweist, der von dem Flächenverlauf der anderen Lagen abweicht.

8. Verfahren zur Herstellung eines Flugschirms nach einem der vorhergehenden Ansprüche, **dadurch gekennzeichnet, dass** ein Verschweißen mindestens zweier Stoffbahnen oder Stoffstücke kontinuierlich bzw. entlang einer Schweißbahn erfolgt.

9. Verfahren nach Anspruch 7, **dadurch gekennzeichnet, dass** ein Verschweißen in einem Bereich von wenigen Zentimetern gleichzeitig erfolgt, vorzugsweise durch einen Schweißstempel, der in entsprechenden Abständen auf die Stoffbahnen oder Stoffstücke gedrückt wird.

10. Verfahren nach Anspruch 8 oder 9, **dadurch gekennzeichnet, dass** ein Schweißverfahren aus einer der folgenden Gruppen verwendet wird: Ultraschallschweißen, Thermoschweißen, Hochfrequenzschweißen, Reibschweißen, Infrarotschweißen, Wärme-Impuls-Schweißen, Laserschweißen.

11. Verfahren nach einem der Ansprüche 8 bis 10, **dadurch gekennzeichnet, dass** beim Verschweißen von Stoffbahnen oder Stoffstücken mit zwei nahe beieinander liegenden, im wesentlichen parallelen Schweißbahnen die beiden Schweißbahnen im wesentlichen gleichzeitig erzeugt werden.

12. Verfahren nach einem der Ansprüche 8 bis 11, **dadurch gekennzeichnet, dass** beim Verschweißen von drei oder mehr Stoffbahnen oder Stoffstücken alle gleichzeitig miteinander verschweißt werden.

13. Verfahren nach einem der Ansprüche 8 bis 12, **dadurch gekennzeichnet, dass** direkt hinter einer Verschweißeinrichtung die erstellte Verschweißung gekühlt wird, insbesondere durch verstärktes Anblasen mit Luft.
